Europäisches Patentamt

European Patent Office

Office européen des brevets

(19)

(11) **EP 0 456 995 B1**

(12)

# EUROPEAN PATENT SPECIFICATION

(45) Date of publication and mention
of the grant of the patent:
**04.12.1996 Bulletin 1996/49**

(51) Int Cl.6: **H04N 5/44**

(21) Application number: **91104592.0**

(22) Date of filing: **23.03.1991**

(54) **Video signal improving method**

Verfahren zur Verbesserung eines Videosignals

Méthode d'amélioration d'un signal vidéo

(84) Designated Contracting States:
**DE FR GB IT**

(30) Priority: **29.03.1990 FI 901590**

(43) Date of publication of application:
**21.11.1991 Bulletin 1991/47**

(73) Proprietor: **SALORA OY**
**SF-241 01 Salo (FI)**

(72) Inventors:
• **Nieminen, Ari**
**SF-33610 Tampere (FI)**
• **Koivunen, Tero**
**SF-33250 Tampere (FI)**

(74) Representative:
**Loesenbeck, Karl-Otto, Dipl.-Ing. et al**
**Jöllenbecker Strasse 164**
**33613 Bielefeld (DE)**

(56) References cited:
**EP-A- 0 347 325          WO-A-87/04034**
**WO-A-88/00783          DE-A- 3 704 777**

• **SIGNAL PROCESSING OF HDTV, II,**
**PROCEEDINGS OF THE THIRD**
**INTERNATIONAL WORKSHOP ON HDTV, Turin,**
**30th August - 1st September 1989, edited by L.**
**Chiariglione, pages 543-648, Elsevier Science**
**Publishers B.V., Amsterdam, NL; G.M.X.**
**FERNANDO et al.: "Motion compensated display**
**field rate conversion of bandwidth compressed**
**HD-MAC pictures"**

## Description

The object of the present invention is a method for improving the characteristics of a signal received by a television set, the signal comprising a video signal and additional information in the form of motion information to be sent alongside with it.

In most television systems under development, also other information is planned to be sent in addition to the video signal itself, e.g. information on motion in the television picture to be sent. In some systems, such additional information is called DATV information (DATV = Digitally Assisted Television).

A television system to transfer such additional information alongside with the video signal is the Eureka95 HDTV system. In this system, the DATV signal contains a so-called branch element and a motion vector, both for a certain standard-sized (16 x 16 image points) image field or block. Branch element contains information on which motion class the image field in question belongs to. There are three motion classes corresponding a static or an immobile block, a slowly moving and a fast moving block. Motion vector shows the direction and speed of the block's movement. A DATV signal is used in the compression of a video signal so that the signal is compressed proportionate to the motion it contains. It is characteristic for the system that the processing of a video signal has been divided into three parallel branches corresponding the three motion classes mentioned above. It must be noted that the motion vector of a DATV signal is transmitted only to the blocks belonging to the middlemost, slowly moving motion class. The motion vector is thus altogether lacking from the static part of the picture or, on the other hand, from the part which is moving fast. The former causes no problems, because the motion vector can be thought to be zero (0,0) for immobile blocks, but in the latter case, the missing motion information causes errors to the picture received. Because of the missing motion vectors, only a part of the field can be interpolated using motion compensation. To the fields interpolated by the receiver, this causes obvious errors between the field parts containing different kinds of motion.

Inaccurate additional information can be detected as a recoiling motion of details of the fast moving parts of the received and decompressed picture which, however, is not related to the true motion of said details. In other words, additional information is imperfect for some parts of the picture, and the correction of this deficiency requires reprocessing of the additional information.

Television standards presently in use, as also the above-mentioned HDTV system, are based on an interlaced video signal, i.e. the picture consists of fields or half-pictures, the lines of which interlace on the screen. Interlacing of the screen and low field frequency cause detectable errors to the television picture. The errors can be eliminated by increasing the display field frequency of the television set. In order to increase the display frequency, new fields have to be interpolated between the original ones so that a part of the pictures shown within a corresponding time period is original, a part of the pictures being new ones formed in the receiver. Interpolation is then performed by using the received additional information. If new fields are formed using motion information which in the above-mentioned way is inaccurate or incorrect, errors caused by the incorrect information are repeated in the new fields. Errors are detectable for the viewer, and the more clearly the larger the error in the motion information is.

DE-A-3704777 relates to a transmitting/receiving system based upon picture compression. The compression is achieved by sending a picture difference signal which changes with time. The received single picture field is compared in relation to the picture field transmitted earlier and to the motion information related thereto.

The interpolator is used for reconstruction of the picture block according to a deviation given by the estimation block. As an example, a considerably large linear FIR filter (with a length of 77 samples) is presented. This filter provides for a spatial correction of 8 samples in horizontal direction and 16 samples in the vertical direction. (Fig.8)

In connection with reconstruction of the signal in the receiver a fine adjustment is carried out using a calculation performed in the sender as a start value. The filter is moved one by one sample over the whole processing window, and one of the filtering results is elected according to certain criteria.

There is no calculation of new motion vectors as to both x-component and y-component, no registration of motion vectors in the memory and the circuitry, no extraction of motion information, no processing of received motion information in the sense of generating new motion information to display picture samples that have not been indicated by the originally received motion information, constituting the basis for said calculation, and are not meant to be indicated at the sender end. As a "one-sided" interpolation is used, the new picture is calculated on the basis of one existing picture.

Publication WO-A-88/00783 discloses a transmission/receiver system wherein additional information is included with a normal PAL signal, this information being used e.g. for increasing the line or field frequency. The new motion information is thereby calculated at the transmitter end like in DE-A-3704777 - and motion information previously existing is not utilized in the calculation.

The object of the present invention is thus to reduce the amount of said errors, and especially to produce a method for improving the characteristics of the received signal.

According to the present invention, the problem is solved by the distinctive features of claim 1. Received additional information is processed in a predetermined way, e.g. by filtering or interpolation. According to the invention, also completely new additional information can be introduced in so far as it is imperfect in the original signal. The processed additional information is used to process the received video signal.

According to the present invention, additional information is especially processed so that the data on the motion of picture elements is corrected.

The method of the invention is advantageously applied to the Eureka95 HDTV system, the additional information to be processed being then DATV information that is sent together with the video signal.

The present invention is next described referring to the enclosed drawings where

Figures 1 - 3 are block diagrams describing the application examples of the realization of the method of the present invention in connection with a HDTV system,

Figure 4 presents a processing window in an exemplary case, and

Figures 5 - 6 present motion vector fields relating to said example.

With the method of the present invention, the accuracy of the additional information of a video signal is improved or otherwise processed to a more suitable form. Additional information can be processed e.g. by shaping existing information without increasing its amount; motion vectors are then filtered with a desired filter.

Alternatively, also new DATV information is additionally interpolated thus developing new and more accurate motion vectors which correspond to sample lines that are shorter than the originals, or even to single samples.

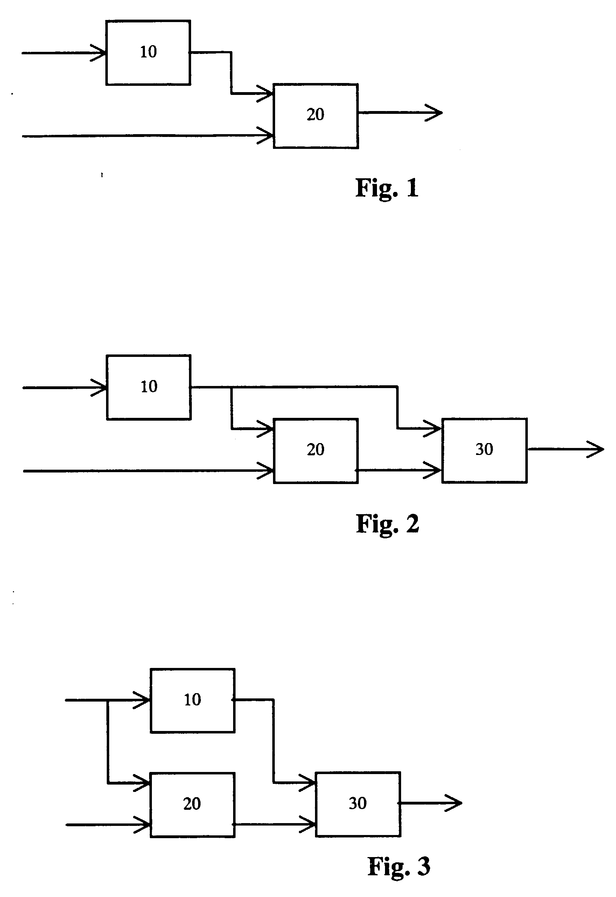

In Figure 1, the additional information coming to the receiver is led through a shaping circuit 10, whereafter the shaped additional information is directed to a decoder 20 the other input of which is the video signal.

In Figure 2 a modification of the method of Figure 1 is shown; the shaped additional information is additionally led to a unit 30 increasing the field frequency, the other input being the output signal of the decoder 20.

Figure 3 shows in form of a block diagram an alternative processing method of a video signal, the received additional information being led both to the shaping circuit 10 and the decoder 20, to which the received video signal is also directed. Output of the shaping circuit 10 and output of the decoder 20 are led as input signals to the unit 30 increasing the field frequency.

In the block diagrams, the shaping circuit 10 contains e.g. a circuit or an interpolator carrying out the desired filtering; it is then possible to use it to complete the motion vector field by interpolating the missing motion vectors. The connection of the blocks in the figures to other parts of the television set is here not explained in more detail, as it it apparent to professionals of the field and known from the publications of the field.

Examples

In the following, an algorithm which can be applied to process the additional information is shown as a principle.

A vector median (vm) is defined in a set x1, x2, x3, ..., xN so that xvm $\epsilon$ { xi | i=1,2,...,N }, and to all j=1,2...,N

$$\sum_{i=1}^{N} \| x_{vm} - x_i \| \leq \sum_{i=1}^{N} \| x_j - x_i \|$$

Both the L1 and L2 standards can be used in the definition so that vm1 and vm2 are correspondingly obtained:

$$vm1: \sum_{i=1}^{N} | x_{vm} - x_i | \leq \sum_{i=1}^{N} | x_j - x_i |$$

$$vm2: \sum_{i=1}^{N} | x_{vm} - x_i |^2 \leq \sum_{i=1}^{N} | x_j - x_i |^2$$

The number N is an even or odd integer number.

Further, the following filters are used:

$$out = \max \left| ax^n - by^n \right|$$

$$out = \max \left| ax^n - by^n \right|$$

$$out = \max \left| |ax| - |by| \right|$$

$$out = \max \left| |ax| - |by| \right|$$

where a and b are coefficients, n is constant, and x and y are the x and y components of the vectors.

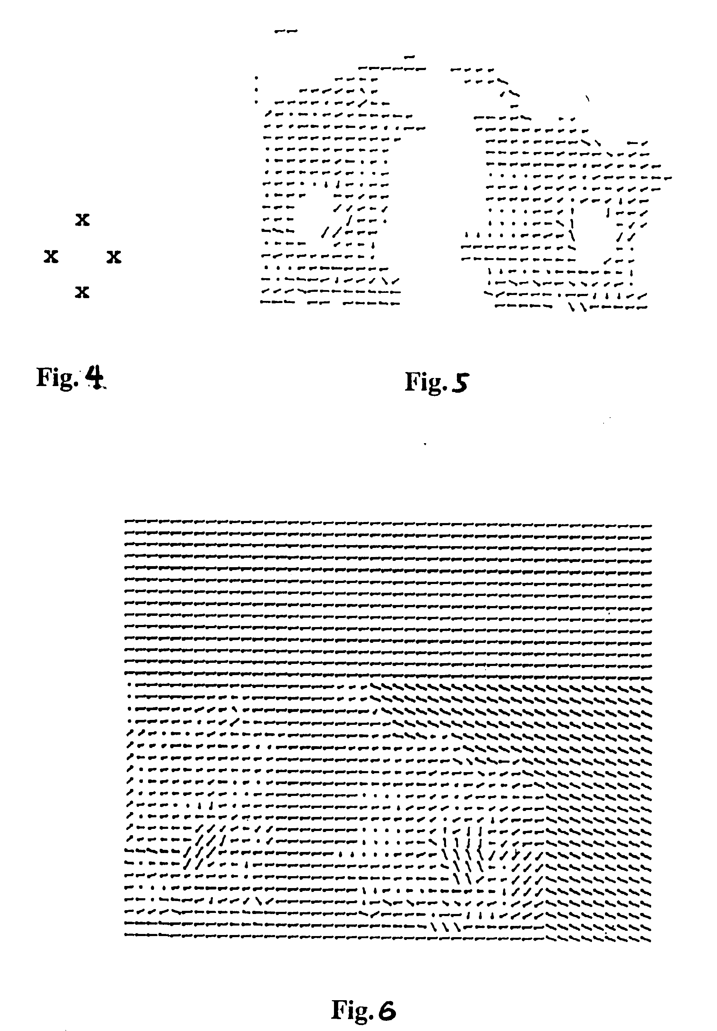

Finally, it is further explained how it is e.g. possible to expand a non-uniform motion vector field to parts devoid of the motion vectors. Processing consists of several iteration cycles each one of which expands a motion vector field with one block, i.e. one vector position to each of the four main directions (up, down, right and left). The method does not change the original motion vectors but copies them iteratively to the surroundings of the original motion vectors. According to Figure 4, a four-point plus window is taken as the processing window.

In the method a motion vector field is examined one position at a time and it is defined whether the position contains a motion vector or not. If not, and if there is a motion vector present in the surroundings of the Figure 4, the motion vector is copied to the present position.

If there are more than one motion vectors in the surroundings (four at the most), the longest of these is chosen. If the position under examination already has a motion vector, one moves to the next position until the whole vector field has been examined. The next iteration cycle is again carried out in the way stated above until the whole motion vector field has been completed. If the motion vector field is completely empty, it will be left unprocessed.

Figure 4 shows the original motion vector field, and in Figure 5, a corresponding motion vector field can be seen completed in the way stated above.

## Claims

1. A method for improving the characteristics of a signal received by a television set, the signal comprising a video signal and additional information in the form of a motion information to be sent alongside with it, **characterized** in that the motion information is processed and formed in a signal shaping circuit of the receiver according to a predetermined algorithm, whereby said predetermined algorithm comprises filtering, without increasing the amount of the motion information, and furthermore, when the original signal is insufficient as to its content of motion information, interpolation of the motion information so that information units contained in the motion information are directed to sample sequences of the video signal shorter than original sequences.

2. A method according to claim 1, **characterized** in that the amount of motion information to be sent alongside with the video signal is increased by attaching parts thereof to sample sequences which originally do not include motion information.

3. A method according to claim 1, **characterized** in that the received motion information is processed in a shaping circuit (10), and subsequently decoded.

4. A method according to claim 3, **characterized** in that the processed motion information is additionally directed to a unit (30) increasing the field frequency, the other input of which is the output signal of the decoder (20).

5. A method according to claim 3, **characterized** in that the received motion information is directed both to the shaping circuit (10) and the decoder (20), the other input of which is the video signal, and that the output of the shaping circuit (10) and the output of the decoder (20) are led as input signals to the unit (30) increasing the field frequency.

6. A method according to one of the preceding claims, where the said motion information contains information of the picture element motion, **characterized** in that the shaping circuit (10) is used to process vectors describing the motion.

**Patentansprüche**

1. Verfahren zur Verbesserung der Eigenschaften eines durch ein Fernsehgerät empfangenen Signales, das Signal enthaltend ein Video- Signal und zusätzliche Information in der Form einer Bewegungsinformation, die mit dieser zusammen gesendet wird,
**dadurch gekennzeichnet, daß**
die Bewegungsinformation bearbeitet und in einem Signal- Modellierungs-Schaltkreis des Empfängers entsprechend einem vorher bestimmten Algorithmus geformt wird, wobei der vorherbestimmte Algorithmus eine Filterung enthält, ohne Erhöhung der Menge der Bewegungsinformation und darüberhinaus, wenn das originale Signal in Bezug auf seine Inhalte an Bewegungsinformation unzulänglich ist, eine Interpolation der Bewegungsinformation, so daß die Informations- Einheiten, die in der Bewegungsinformation enthalten sind, zu Sample- Sequenzen des Videosignales kürzer als Original- Sequenzen geleitet werden.

2. Verfahren gemäß Anspruch 1, **dadurch gekennzeichnet, daß** die Menge der Bewegungsinformation, die mit dem Videosignal übertragen wird, durch Hinzufügen von Teilen davon zu Sample- Sequenzen vergrößert wird, die im Original keine Bewegungsinformation beinhalten.

3. Verfahren gemäß Anspruch 1, **dadurch gekennzeichnet, daß** die empfangene Bewegungsinformation in einem Modellierungs- Schaltkreis (10) bearbeitet wird, und nachher dekodiert wird.

4. Verfahren gemäß Anspruch 3, **dadurch gekennzeichnet, daß** die bearbeitete Bewegungsinformation zusätzlich zu einer Einheit (30) geleitet wird, die die Feldfrequenz erhöht, wobei deren andere Eingabe das Ausgabesignal des Dekoders (20) ist.

5. Verfahren gemäß Anspruch 3, **dadurch gekennzeichnet, daß** die empfangene Bewegungsinformation sowohl zu dem Modellierungs-Schaltkreis (10) und dem Dekoder (20) geleitet wird, wobei deren andere Eingabe das Video- Signal ist, und daß die Ausgabe des Modellierungs-Schaltkreises (10) und die Ausgabe des Dekoders (20) als Eingabesignale zu der Einheit (30) zum Erhöhen der Feldfrequenz geleitet werden.

6. Verfahren gemäß einem der vorstehenden Ansprüche, wobei die besagte Bewegungsinformation Information über die Bewegung von Bildelementen enthält, **dadurch gekennzeichnet, daß** der Modellierungs- Schaltkreis (10) zum Bearbeiten der Vektoren dient, die die Bewegung beschreiben.

**Revendications**

1. Procédé de perfectionnement des caractéristiques d'un signal vidéo reçu par un téléviseur, le signal comprenant un signal vidéo et des informations supplémentaires en forme d'informations de mouvement envoyées avec le signal, caractérisé en ce que les informations de mouvement sont traitées et mises en forme dans un circuit de mise en forme du signal faisant partie du récepteur selon un algorithme prédéterminé, dans lequel ledit algorithme prédéterminé comprend un filtrage n'augmentant pas la quantité des informations de mouvement, et en outre, quand le signal original a un contenu insuffisant d'informations de mouvement, une interpolation des informations de mouvement de manière que des unités d'informations de mouvement contenues dans les informations de mouvement soient dirigées vers des séquences d'échantillons du signal vidéo plus courtes que les séquences originales.

2. Procédé selon la revendication 1, caractérisé en ce que la quantité d'informations de mouvement à envoyer avec le signal vidéo est augmentée en reliant des parties de ces informations à des séquences d'échantillons qui, à l'origine ne contiennent pas d'information de mouvement.

3. Procédé selon la revendication 1, caractérisé en ce que les informations de mouvement reçues sont traitées dans un circuit de mise en forme (10) et décodées ultérieurement.

4. Procédé selon la revendication 3, caractérisé en ce que les informations de mouvement traitées sont en plus dirigées vers une unité (30) qui augmente la fréquence de trame, et reçoit sur son autre entrée le signal de sortie du décodeur (20);

5. Procédé selon la revendication 3, caractérisé en ce que les informations de mouvement reçues sont dirigées à la fois vers le circuit de mise en forme (10) et vers le décodeur (20) qui reçoit le signal vidéo sur son autre entrée, et en ce que la sortie du circuit de mise en forme (10) et la sortie du décodeur (20) sont appliquées comme signaux d'entrée à l'unité (30) qui augmente la fréquence de trame.

6. Procédé selon l'une des revendications précédentes, dans lequel lesdites informations de mouvement contiennent des informations de mouvement des éléments d'image, caractérisé en ce que le circuit de mise en forme (10) sert à traiter des vecteurs définissant le mouvement.

Fig. 1

Fig. 2

Fig. 3

Fig. 4

Fig. 5

Fig. 6